# FASCICULE DE BREVET EUROPEEN

(11) **EP 1 827 940 B1**
(45) Date de publication et mention de la délivrance du brevet: **24.03.2010**
(21) Numéro de dépôt: 04816430.5
(22) Date de dépôt: 17.12.2004
(51) Int. Cl.: B60T 17/18

(54) **DISPOSITIF DE FREINAGE POUR UN VEHICULE INDUSTRIEL**
BREMSVORRICHTUNG FÜR EIN INDUSTRIEFAHRZEUG
BRAKING DEVICE FOR AN INDUSTRIAL VEHICLE

(43) Date de publication de la demande: 05.09.2007
(73) Titulaire: RENAULT TRUCKS, 69800 St Priest (FR)
(72) Inventeur: ROLLIN, Christian, F-38460 Saint Romain de Jalionas (FR)
(74) Mandataire: Putet, Gilles
(86) Numéro de dépôt international: PCT/FR2004/003296
(87) Numéro de publication internationale: WO 2006/067283

(56) Documents cités:
- EP-A- 0 387 004
- US-A- 4 585 278
- US-A- 4 770 470
- US-B1- 6 179 391

## Description

### Domaine technique de l'invention

La présente invention concerne un système de freinage pour un véhicule industriel.

### Arrière plan technologique

De façon classique, les véhicules industriels et notamment les camions (par camion, on entend tout véhicule motorisé destiné à porter ou tracter une charge) sont équipés d'un système de freinage fonctionnant grâce à de l'énergie pneumatique.

Une particularité des camions réside dans le fait qu'ils possèdent deux circuits de freinage. Un circuit de freinage commande les freins du ou des trains roulants arrière tandis que le second circuit de freinage commande les freins du ou des trains roulants avant. Chaque circuit de freinage comporte son propre réservoir d'air comprimé qui est relié à un circuit de commande de freinage.

Lors de l'homologation d'un camion, il est pratiqué un test dans lequel le circuit de freinage avant est neutralisé. Pour recevoir un certificat d'homologation, le camion doit néanmoins pouvoir conserver une certaine capacité de décélération.

Il doit être précisé que ce test d'homologation est généralement réalisé avec un camion sans charge. Or, un camion présente une répartition des masses très inégales avec une concentration de masse sur l'avant. L'adhérence sur le ou les trains roulants arrière est donc très faible si bien qu'un freinage exercé uniquement sur le train arrière peut se révéler insuffisant.

Par ailleurs, en conditions d'opération d'un véhicule industriel, il peut se produire une défaillance de l'un des circuits de freinage. Certes, dans ce cas le second circuit de freinage reste opérationnel. Mais une perte totale de freinage sur un essieu ou un groupe d'essieux peut s'avérer extrêmement préjudiciable surtout si la défaillance se produit dans un cas défavorable, notamment un véhicule dont la masse est principalement concentrée sur l'avant et dont le circuit de freinage avant est inopérant.

Il existe certes des systèmes qui permettent de rétablir une certaine capacité de freinage sur l'essieu ou le groupe d'essieux dont le circuit de freinage est défaillant. Toutefois, ces systèmes sont complexes, coûteux et permettent généralement de rétablir une capacité de freinage uniquement sur une roue du train roulant dont le circuit de freinage est défaillant.

Par ailleurs, le document US-B1-6.179.391 décrit un système de freinage qui est capable de freiner un véhicule dans le cas où un circuit de freinage arrière est défaillant. Ce système prévoit d'ajouter un second circuit de commande à un premier circuit de commande pour le circuit de freinage arrière.

### Résumé de l'invention

Un but de l'invention est de proposer un dispositif de freinage pour un véhicule industriel ayant une fonction de secours permettant de rétablir une certaine capacité de freinage à un circuit de freinage défaillant.

Un autre but de l'invention est de proposer un dispositif de freinage ayant une fonction de secours agissant sur les deux roues du train roulant dont le circuit de freinage est défaillant.

Un autre but de l'invention est de proposer un dispositif de freinage ayant une fonction de secours qui soit fiable.

Un autre but de l'invention est de proposer un dispositif de freinage ayant une fonction de secours dont le surcoût reste mesuré.

L'invention a essentiellement pour objet un dispositif de freinage notamment pour un véhicule industriel, comprenant au moins deux circuits de freinage pneumatiques agissant respectivement sur au moins deux trains roulants, chaque circuit de freinage présentant un circuit fluidique de puissance pouvant fournir une énergie de freinage à un train roulant et un circuit fluidique de commande pouvant fixer une valeur de freinage à appliquer sur un train roulant. Le dispositif de freinage comprend, en outre, des moyens de dérivation du fluide sous pression du circuit de commande d'un circuit de freinage vers le circuit de puissance d'un autre circuit de freinage dans le cas où le circuit de puissance de ce dernier circuit de freinage subit une chute de pression. L'invention permet ainsi, pour un véhicule ayant au moins deux circuits de freinage, de pallier une défaillance d'un circuit de puissance d'un des circuits de freinage en utilisant comme énergie de freinage le fluide sous pression du circuit de commande d'un autre circuit de freinage.

Dans une forme de réalisation, le dispositif de freinage comprend un circuit de freinage avant et un circuit de freinage arrière. Le circuit de freinage avant inclut :
i-un circuit avant fluidique de puissance, et
ii-un circuit avant fluidique de commande.

En ce qui concerne le circuit de freinage arrière, celui-ci inclut :
i-un circuit arrière fluidique de puissance, et
ii- un circuit arrière fluidique de commande.

Le circuit de freinage avant est équipé de moyens de dérivation du fluide sous pression du circuit arrière fluidique de commande vers le circuit fluidique avant de puissance dans le cas où le circuit avant fluidique de puissance du circuit de freinage avant subit une chute de pression.

Selon une autre forme de réalisation, le dispositif de freinage comprend un circuit de freinage avant et un circuit de freinage arrière. Le circuit de freinage avant inclut :
i-un circuit avant fluidique de puissance, et
ii-un circuit avant fluidique de commande.

En ce qui concerne le circuit de freinage arrière, celui-ci inclut :
i-un circuit arrière fluidique de puissance, et
ii-un circuit arrière fluidique de commande.

Dans cette forme de réalisation, le circuit de freinage arrière est équipé de moyens de dérivation du fluide sous pression du circuit avant fluidique de commande vers le circuit arrière fluidique de puissance dans le cas où le circuit arrière fluidique de puissance du circuit de freinage arrière subit une chute de pression.

Selon une autre forme de réalisation, le dispositif de freinage comprend un circuit de freinage avant et un circuit de freinage arrière. Le circuit de freinage avant inclut :
i-un circuit avant fluidique de puissance, et
ii-un circuit avant fluidique de commande.

En ce qui concerne le circuit de freinage arrière, celui-ci inclut :
i-un circuit arrière fluidique de puissance, et
ii-un circuit arrière fluidique de commande.

Dans cette forme de réalisation, le circuit de freinage avant est équipé de moyens de dérivation du fluide sous pression du circuit arrière fluidique de commande vers le circuit fluidique avant de puissance dans le cas où le circuit avant fluidique de puissance du circuit de freinage avant subit une chute de pression, et

le circuit de freinage arrière est équipé de moyens de dérivation du fluide sous pression du circuit avant fluidique de commande vers le circuit arrière fluidique de puissance dans le cas où le circuit arrière fluidique de puissance du circuit de freinage arrière subit une chute de pression.

De manière avantageuse, les moyens de dérivations comprennent une double valve d'arrêt susceptible de dériver du fluide sous pression du circuit de commande d'un circuit de freinage vers le circuit fluidique de puissance d'une autre circuit de freinage dans le cas où le circuit fluidique de puissance de ce dernier circuit de freinage subit une chute de pression

Dans une forme de réalisation préférée de la double valve d'arrêt, celle présente une première entrée, une seconde entrée, une sortie et un obturateur susceptible d'obturer alternativement l'une des entrées. La première entrée est connectée à un premier circuit fluidique de puissance d'un circuit de freinage. La seconde entrée est connectée au circuit fluidique de commande à second circuit de freinage. La sortie de la double valve de l'arrêt est connectée à un module électronique de contrôle de freinage de premier circuit de freinage. L'obturateur est susceptible d'occuper une position de fonctionnement normal dans laquelle la pression du circuit de puissance du premier circuit de freinage plaque l'obturateur contre l'entrée connectée au circuit de commande du second circuit de freinage et une position de fonctionnement défaillant dans laquelle la pression du circuit fluidique de commande du second circuit plaque l'obturateur contre l'entrée connectée au circuit de puissance du premier circuit de freinage. Le circuit de commande du second circuit fournit ainsi une énergie de freinage au module électronique de contrôle de freinage du premier circuit de freinage.

Dans une forme de réalisation pour un véhicule industriel de type camion ou tracteur, l'invention concerne un dispositif de freinage d'un véhicule industriel comprenant un circuit de freinage avant et un circuit de freinage arrière. Le circuit de freinage avant inclut :
i-un circuit avant fluidique de puissance destiné à fournir une énergie de freinage à au moins un train roulant avant du véhicule possédant deux roues liées chacune à des moyens de freinage. Le circuit fluidique de puissance avant comprend un réservoir de fluide sous pression connecté à au moins deux actionneurs de frein agissant sur les moyens de freinage de chaque roue et un module électronique de contrôle de freinage avant pilotant la pression à appliquer à chacun des deux actionneurs, et
ii- un circuit avant fluidique de commande destiné à fixer une valeur de consigne à appliquer au module électronique de contrôle de freinage avant au cours d'une phase de freinage. Le circuit avant fluidique de commande comprend un dispositif de commande sur lequel une action est appliquée au cours d'une phase de freinage connecté au module électronique de contrôle de freinage avant. La pression du circuit avant fluidique de commande est inférieure à la pression du circuit avant fluidique de puissance.

Le circuit de freinage arrière inclut :
i-un circuit arrière fluidique de puissance destiné à fournir une énergie de freinage à au moins un train roulant arrière du véhicule possédant deux roues liées chacune à des moyens de freinage. Le circuit arrière fluidique de puissance arrière comprend un réservoir de fluide sous pression connecté à au moins deux actionneurs de frein agissant sur les moyens de freinage et un module électronique de contrôle de freinage arrière pilotant la pression à appliquer à chacun des deux actionneurs, et
ii-un circuit arrière fluidique de commande destiné à fixer la valeur de consigne à appliquer au module électronique de contrôle de freinage arrière au cours d'une phase de freinage. Le circuit arrière fluidique de commande inclut le dispositif de commande, sur lequel une action est appliquée au cours d'une phase de freinage, connecté au module électronique de contrôle de freinage arrière. La pression du circuit arrière fluidique de commande est inférieure à la pression du second circuit arrière fluidique de puissance.

Au moins l'un des circuits de freinage avant ou arrière comprend une double valve d'arrêt. Celle-ci présente une première entrée connectée au circuit fluidique de puissance dudit circuit de freinage, une seconde entrée connectée au circuit fluidique de commande de l'autre circuit de freinage et une sortie. La sortie de la double valve de l'arrêt est connectée au module électronique de contrôle de freinage dudit circuit de freinage. La double valve d'arrêt présente un obturateur susceptible d'occuper une position de fonctionnement normal dans laquelle la pression du circuit de puissance dudit circuit de freinage plaque l'obturateur contre l'entrée connectée au circuit de commande de l'autre circuit de freinage et une position de fonctionnement défaillant dans laquelle la pression du circuit fluidique de commande de l'autre circuit plaque l'obturateur contre l'entrée connectée au circuit de puissance dudit circuit de freinage et fournit une énergie de freinage au module électronique de contrôle de freinage dudit circuit de freinage pilotant la pression à appliquer à chacun des deux actionneurs.

Selon une forme de réalisation de l'invention, le circuit de freinage avant comprend une double valve d'arrêt présentant une première entrée connectée au circuit fluidique de puissance du circuit de freinage avant, une seconde entrée connectée au circuit fluidique de commande du circuit fluidique arrière, la sortie de la double valve d'arrêt étant connectée au module électronique de contrôle de freinage avant, et un obturateur susceptible d'occuper une position de fonctionnement normal dans laquelle la pression du circuit de puissance avant plaque l'obturateur contre l'entrée connectée au circuit arrière de commande et une position de fonctionnement défaillant dans laquelle la pression du circuit arrière de commande plaque l'obturateur contre l'entrée connectée au circuit avant de puissance et fournit une énergie de freinage au module électronique de contrôle de freinage avant pilotant la pression à appliquer à chacun des deux actionneurs avant. Cette forme de réalisation est plus particulièrement adaptée à un véhicule industriel de type camion tracteur qui présente un empattement relativement court.

Selon une autre forme de réalisation, le circuit de freinage arrière comprend une double valve d'arrêt présentant une première entrée connectée au circuit fluidique de puissance du circuit de freinage arrière, une seconde entrée connectée au circuit fluidique de commande du circuit fluidique avant, la sortie de la double valve d'arrêt étant connectée au module électronique de contrôle de freinage arrière, et un obturateur susceptible d'occuper une position de fonctionnement normal dans laquelle la pression du circuit de puissance arrière plaque l'obturateur contre l'entrée connectée au circuit avant de commande et une position de fonctionnement défaillant dans laquelle la pression du circuit avant de commande plaque l'obturateur contre l'entrée connectée au circuit arrière de puissance et fournit une énergie de freinage au module électronique de contrôle de freinage arrière pilotant la pression à appliquer à chacun des deux actionneurs arrière.

Dans le cas de véhicules industriels de type camion, l'énergie de freinage peut être fournie de manière pneumatique de sorte qu'il est prévu que les réservoirs renferment de l'air comprimé.

L'air comprimé peut être alors fourni par un compresseur et un distributeur d'air qui alimentent en air comprimé les réservoirs.

L'invention fournit ainsi un dispositif de freinage pour palier une défaillance d'un de ses circuits de freinage.

L'élément permettant ce freinage de secours peut être au moins une double valve d'arrêt et éventuellement deux doubles valves d'arrêt qui permettent de suppléer le circuit de puissance d'un circuit de freinage défaillant par le circuit de commande de l'autre circuit de freinage.

Structurellement, la valve d'arrêt qui peut permettre la mise en oeuvre de l'invention est un élément simple dont le fonctionnement est très fiable. Le coût de cet élément est, par ailleurs, modeste.

En outre, il s'agit d'un élément de relativement faible encombrement qui peut être fixé directement sur le module électronique de contrôle de freinage.

### Brève description des figures

Pour sa bonne compréhension, l'invention est décrite en référence au dessin ci annexé représentant à titre d'exemple non limitatif deux formes de réalisation du dispositif de freinage d'un véhicule industriel selon celle-ci.
Figure 1 est un diagramme conceptuel représentant un dispositif de freinage selon l'art antérieur,
Figure 2 est un diagramme conceptuel représentant d'une forme de réalisation d'un dispositif de freinage en fonctionnement normal,
Figure 3 est un diagramme conceptuel représentant le dispositif de freinage de la figure 2 selon une mode de fonctionnement anormal,
Figure 4 est un diagramme conceptuel représentant une autre forme de réalisation d'un dispositif de freinage en fonctionnement normal,
Figure 5 et figure 6 sont des diagrammes conceptuels représentant le dispositif de freinage de la figure 4, selon des modes de fonctionnement anormaux.

### Description détaillée de l'invention

Par simplification, il est précisé que les éléments qui se retrouvent dans les deux formes de réalisation sont désignés par les mêmes références numériques.

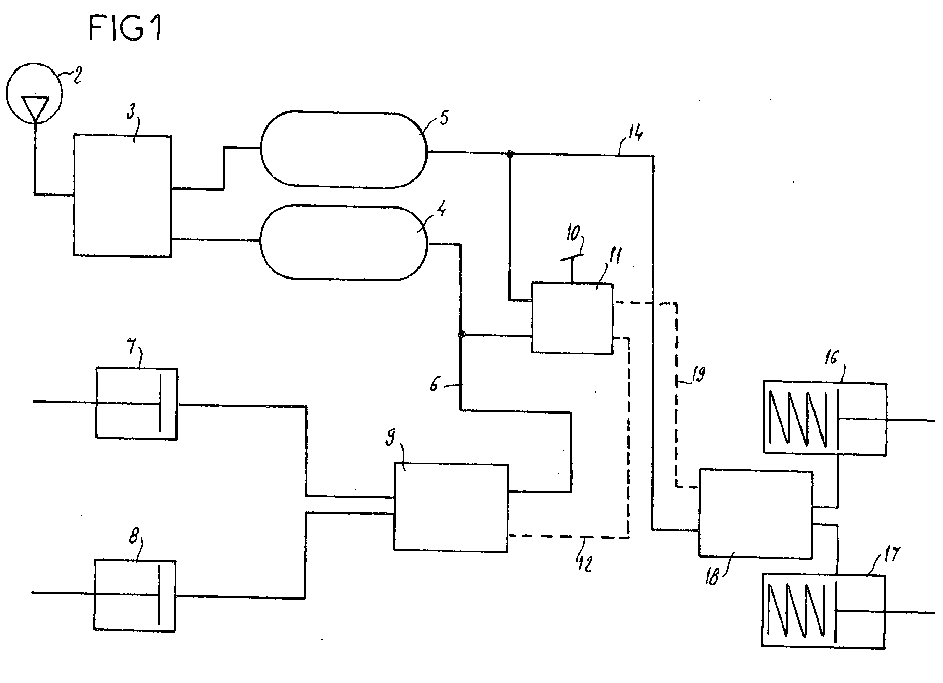

La figure 1 montre schématiquement l'architecture d'un dispositif de freinage pour un véhicule industriel selon l'art antérieur.

De façon générale, le freinage d'un véhicule industriel, par exemple un camion porteur d'une charge ou tracteur d'une charge, est assuré de manière pneumatique. A cet effet, comme on peut le voir sur les figures, il est prévu un compresseur d'air 2 qui alimente un distributeur d'air 3. Le distributeur d'air 3 a, comme fonction, de filtrer et réguler la pression de l'air provenant du compresseur d'air 2.

En aval du distributeur d'air 3, on trouve deux réservoirs 4, 5 qui alimentent respectivement un circuit de puissance pneumatique avant destiné à fournir l'énergie de freinage au train roulant avant et un circuit de puissance pneumatique arrière destiné à fournir l'énergie de freinage au train roulant arrière.

Par convention, sur la figure 1 chacun des circuits de puissance est représenté en traits continus. La pression pour chacun des circuits de puissance est de l'ordre de 12 bars.

Le circuit de puissance avant 6 est bien entendu raccordé à deux actionneurs de frein 7, 8 qui convertissent l'énergie pneumatique en une action mécanique sur un moyen de freinage d'une roue, c'est-à-dire un disque ou un tambour selon les cas. Les moyens de freinage ne sont pas représentés sur les figures, en raison de leurs caractéristiques largement connues.

La pression pneumatique appliquée sur les actionneurs est commandée par un module de contrôle électronique de contrôle de freinage, plus connu par son sigle EBS, qui fixe la valeur de consigne à appliquer sur les actionneurs 7, 8 au cours d'un freinage.

Le freinage est déclenché par un conducteur de véhicule qui appuie, généralement, avec son pied sur une pédale 10 d'un dispositif de commande 11.

En fonction de la course appliquée sur la pédale 10, un signal pneumatique est transmis au travers d'un circuit pneumatique de commande 12 au module électronique de contrôle de freinage avant 9 pour fixer une valeur de consigne à appliquer aux deux actionneurs 7, 8 de freinage. Le dispositif de commande 11 comprend un robinet auto limité qui fait que même à demande de freinage maximale exercée sur la pédale 10, la pression dans le circuit de commande 12 est toujours inférieure à la pression d'alimentation. Il doit être noté que le dispositif de commande 11 envoie également un signal électrique par une liaison filaire au module électronique de contrôle de freinage avant 9. Le pilotage du module électronique de contrôle de freinage avant 9 est à la fois électrique et pneumatique. La liaison électrique n'est pas représentée sur le figure 1 ni sur les figures suivantes.

Le circuit de commande avant 12, par convention, est représenté en traits discontinus et relie donc le dispositif de commande 11 au module électronique de contrôle de freinage avant 9. L'énergie pneumatique du circuit de commande est alimentée en air comprimé par le réservoir avant 4. La pression dans le circuit de commande avant 12 est proportionnelle à la demande de freinage et demeure inférieure à 10 bars même en cas de freinage maximal exercé sur la pédale 10. La pression dans le circuit de commande avant 12 est donc sensiblement inférieure à la pression du circuit de puissance qui est de l'ordre de 12 bars.

Le circuit de freinage arrière présente la même structure que celle du circuit de freinage avant. Le circuit de freinage arrière comprend un circuit pneumatique de puissance arrière 14 représenté par convention en traits continus dans lequel la pression est de l'ordre de 12 bars et un circuit pneumatique de commande arrière 19 représenté en traits discontinus dans lequel le pression maximale est de l'ordre de 10 bars.

Le circuit de puissance arrière 14 d'une pression de l'ordre de 12 bars est relié à deux actionneurs arrière 16, 17 agissant sur des moyens de freinage des roues (non représentés sur les figures). Un module électronique de contrôle de freinage arrière 18 permet de contrôler la pression pneumatique appliquée aux deux actionneurs arrière 16, 17 agissant sur les moyens de freinage de chaque roue arrière.

Un circuit de commande arrière 19 relie le dispositif de commande au module électronique de contrôle de freinage arrière 18 avec une pression maximale de l'ordre de 10 bars.

Le circuit de commande arrière 19 pilote, en fonction de la course appliquée sur la pédale 10 et donc sur le dispositif de commande 11, la valeur de consigne de la pression pneumatique à affecter à chaque actionneur 16, 17 arrière. De manière analogue au circuit de freinage avant, le dispositif de commande 11 envoie également un signal électrique par une liaison filaire au module électronique de contrôle de freinage arrière 18. Le pilotage du module électronique de contrôle de freinage arrière 18 est à la fois électrique et pneumatique.

On constate donc qu'une défaillance d'un des circuits de puissance se traduit par une perte de freinage totale du train roulant concerné par le circuit de puissance défaillant.

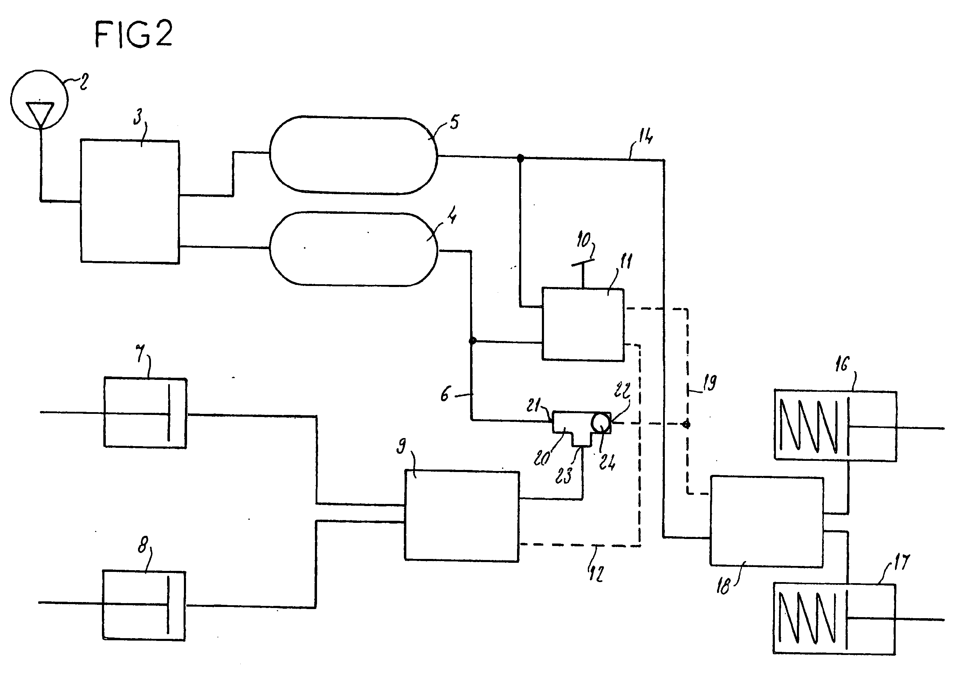

En se reportant maintenant à la figure 2, on note, par ailleurs, qu'une double valve d'arrêt 20 est montée sur le circuit de puissance avant 6.

La double valve d'arrêt présente deux entrées 21, 22 et une sortie 23 ; un clapet 24 circule entre les deux entrées 21 et 22 et obture l'entrée qui est à la pression la plus faible.

Comme le montre la figure 2, la double valve d'arrêt 20 présente une entrée 21 connectée au circuit de puissance avant 6 qui est sous une pression d'environ 12 bars et une entrée 22 qui est connectée au circuit de commande arrière 12 qui est sous une pression maximale d'environ 10 bars lors d'un freinage. La sortie 23 de la double valve d'arrêt est connectée au module électronique de contrôle de freinage avant 9.

Le circuit de freinage, lorsqu'il est dans un mode de fonctionnement normal illustré à la figure 2, fonctionne avec deux circuits de freinage avant et arrière qui se comportent de manière indépendante. Une action sur le dispositif de commande 11 se traduit par un freinage par les actionneurs avant 7 et 8 et un freinage par les actionneurs arrière 16 et 17.

Au niveau de la double valve d'arrêt 20, la pression du circuit de puissance avant 6 étant supérieure à la pression du circuit de commande arrière 19, l'obturateur 24 est dans une position telle qu'il obture l'entrée 22 connectée au circuit de commande arrière 19. Ceci a pour effet que, en condition de fonctionnement normale du dispositif de freinage, la double valve d'arrêt 20 a un fonctionnement transparent puisque le fluide même du circuit de puissance avant 6 maintient l'obturateur 24 dans une position telle qu'aucun échange ne peut se faire avec le circuit de commande arrière 23.

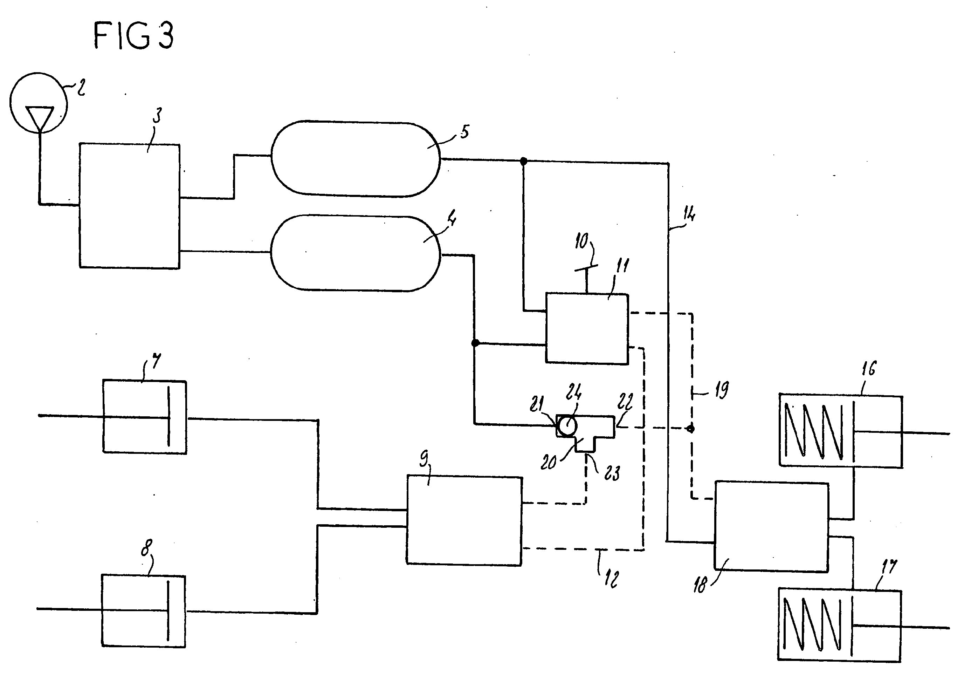

La figure 3 montre le dispositif de freinage dans un mode de fonctionnement anormal dans lequel le circuit de freinage avant est défaillant. Cette défaillance peut être accidentelle ou délibérée dans le cas d'un test d'homologation.

Une défaillance dans le circuit de freinage avant 6 se traduit normalement par une perte de pression pneumatique si bien qu'aucune puissance ne parvient aux deux actionneurs avant 7,8.

Dans l'état du dispositif représenté à la figure 3, une perte de pression dans le circuit de puissance avant 6 se traduit au niveau de la double valve d'arrêt 20 par un déplacement de l'obturateur 24 qui fait que la double valve d'arrêt admet, par son entrée 22 connectée au circuit de commande arrière, de l'air sous une pression proportionnelle à la demande de freinage. On voit alors que le module électronique de contrôle de freinage avant 9 est alimenté par le circuit de commande arrière 19, ce qui permet d'agir ensuite sur les deux actionneurs avant 7 et 8. La liaison électrique reliant le dispositif de commande 11 au module électronique de contrôle de freinage avant 9 permet de fixer une valeur de consigne de freinage à ce dernier.

On peut voir sur la figure 3 que la portion du circuit de puissance située en amont de la double valve d'arrêt 20 est représentée en traits discontinus pour bien illustrer la disposition selon laquelle module électronique de contrôle de freinage avant 9 est alimenté an air comprimé par le circuit de commande arrière 19.

On constate donc, de façon tout à fait remarquable, qu'une certaine puissance de freinage est rétablie sur les deux roues avant, ce qui permet de ralentir et arrêter un véhicule industriel, même lorsque son circuit de freinage avant est défaillant.

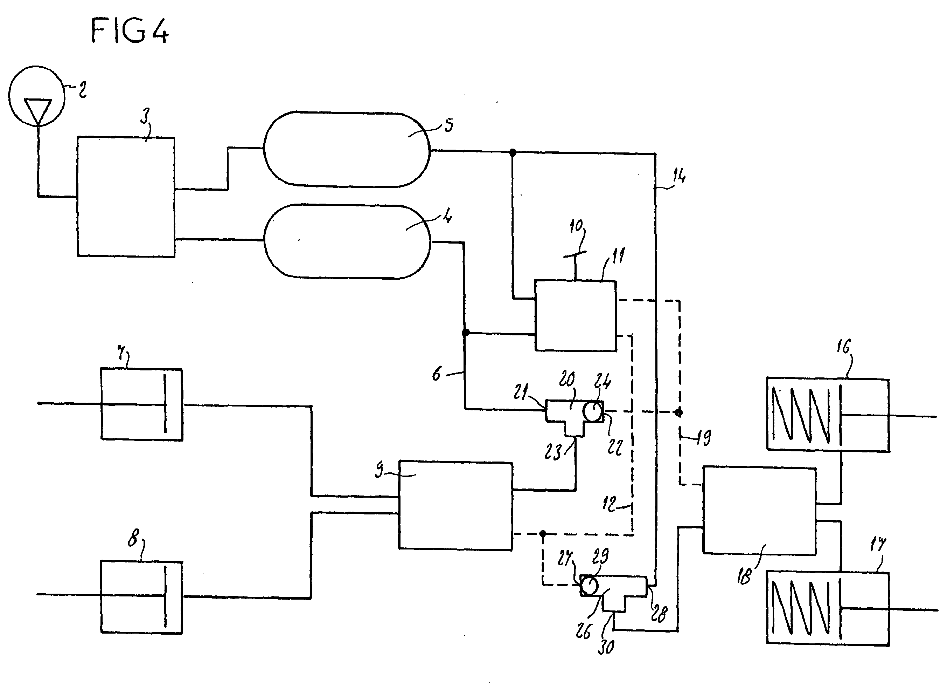

Figure 4 représente une forme de réalisation du dispositif de freinage présentant un degré de sécurisation supplémentaire par rapport à celui qui est représenté aux figures 2 et 3.

En effet, il est prévu de doter le dispositif de freinage de deux doubles valves d'arrêt.

Une deuxième valve d'arrêt 26 est en effet placée sur le circuit de puissance arrière 14. De manière symétrique à la première double valve d'arrêt 20, cette seconde valve d'arrêt 26 présente une entrée 27 connectée au circuit de puissance arrière 14 et une entrée 28 connectée au circuit de commande avant 12 entre lesquelles circule un obturateur. La sortie 30 de la double valve d'arrêt est reliée au module électronique de contrôle de freinage arrière 18.

En mode de fonctionnement normal, montré par la figure 4, les obturateurs 24 et 29 de chacune de la double valve d'arrêt 20, 26 sont poussés contre leurs entrées respectives connectées à un circuit de commande respectif 12, 19.

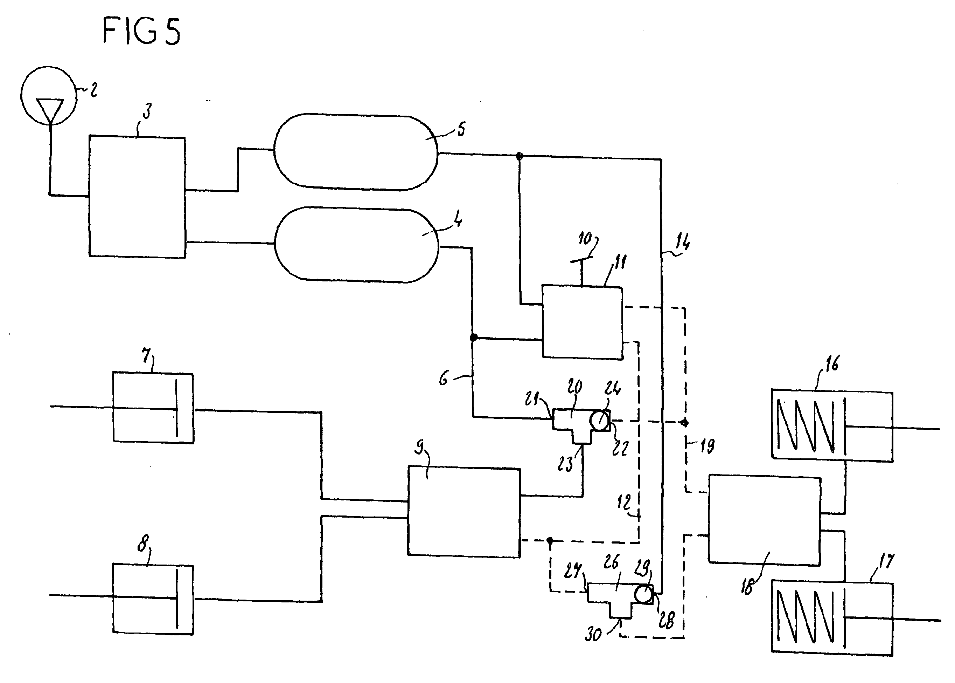

Dans le cas d'un fonctionnement anormal du circuit de freinage arrière représenté à la figure 5, le circuit de freinage arrière se trouve à une pression nulle ou tout au moins insuffisante pour agir sur les actionneurs 16 et 17.

Lorsqu'une action est exercée sur la pédale 10, le circuit de commande avant 12 qui pilote normalement le module électronique de contrôle de freinage avant 9 est sous une pression proportionnelle à la demande de freinage et en tout état de cause inférieure à 10 bars. Le circuit de commande avant 12 étant connectée à la double valve d'arrêt 26 du circuit arrière, l'obturateur 29 est déplacé et permet d'admettre de l'air comprimé dans le module électronique de contrôle de freinage arrière 18.

Cet air comprimé injecté dans le module électronique de contrôle de freinage arrière 18 permet d'agir sur les actionneurs 16 et 17. On peut voir sur la figure 5 que la portion du circuit de puissance arrière située en amont de la double valve d'arrêt 26 est représentée en traits discontinus illustrant le fait que le module électronique de contrôle de freinage arrière 18 est alimenté en air comprimé par le circuit de commande avant 12.

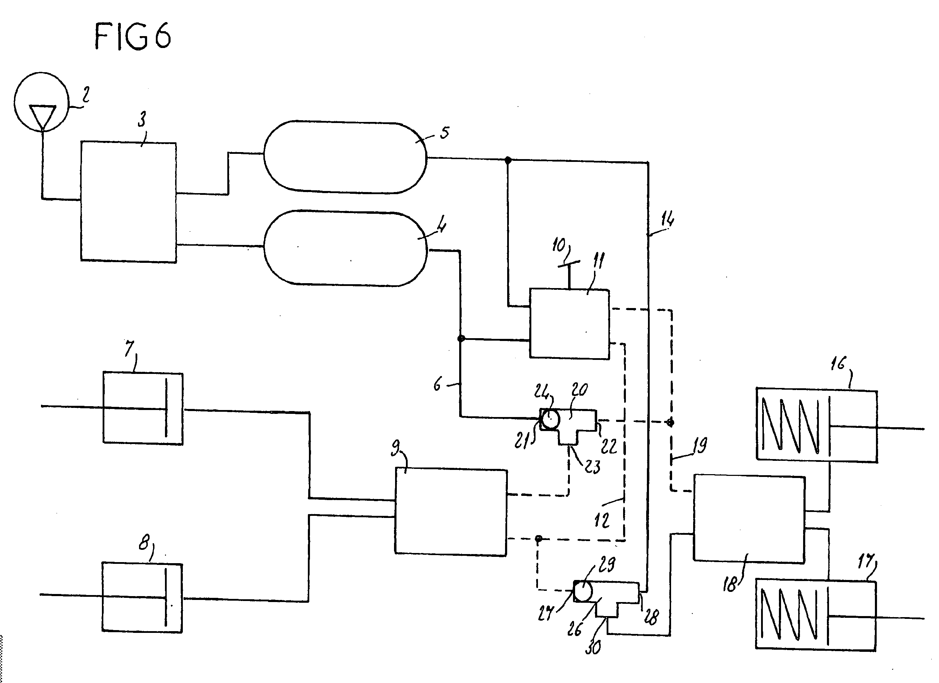

La figure 6 illustre le dispositif de freinage dans un mode de fonctionnement anormal du circuit de freinage avant.

Dans ce cas de figure, le circuit de puissance avant 6 se trouve à une pression nulle. L'obturateur 24 de la double valve d'arrêt 20 est alors poussé par la pression de l'air comprimé du circuit de commande arrière 19 au cours d'un freinage. Sur la figure 6, la portion du circuit de puissance située en amont de la double valve d'arrêt 20 est représentée en traits discontinus de façon à montrer l'effet de la double valve d'arrêt 20 qui est que module électronique de contrôle de freinage avant 9 est alimenté an air comprimé par le circuit de commande arrière 19.

L'air comprimé, sous une pression proportionnelle à la demande de freinage, en provenance du circuit de commande arrière 19 alimente le module électronique de contrôle de freinage avant 9, ce qui permet d'assurer un freinage de secours très significatif sur les deux roues avant par l'intermédiaire des deux actionneurs avant 7 et 8.

Bien entendu, l'invention n'est pas limitée aux formes de réalisation décrite ci-dessus, mais elle en embrasse au contraire toutes les variantes de réalisation. L'invention pourrait notamment être mise en oeuvre dans le cadre d'un dispositif de freinage hydraulique.

## Revendications

1. Dispositif de freinage notamment pour un véhicule industriel, comprenant au moins deux circuits de freinage fluidiques agissant respectivement sur au moins deux trains roulants (7,8,16,17), chaque circuit de freinage présentant un circuit fluidique de puissance (6,14) pouvant fournir une énergie de freinage à un train roulant et un circuit fluidique de commande (12,19) pouvant fixer une valeur de freinage à appliquer sur un train roulant, **caractérisé en ce qu'**il comprend des moyens de dérivation du fluide sous pression du circuit de commande (12,19) d'un circuit de freinage vers le circuit fluidique de puissance (6,14) d'un autre circuit de freinage dans le cas où le circuit fluidique de puissance de ce dernier circuit de freinage subit une chute de pression.

2. Dispositif de freinage selon la revendication 1, **caractérisé en ce qu'**il comprend
un circuit de freinage avant incluant :
i-un circuit avant fluidique de puissance (6), et
ii-un circuit avant fluidique de commande (12),
un circuit de freinage arrière incluant :
i-un circuit arrière fluidique de puissance (14), et
ii-un circuit arrière fluidique de commande (19),
le circuit de freinage avant étant équipé de moyens de dérivation du fluide sous pression du circuit arrière fluidique de commande (19) vers le circuit fluidique avant de puissance (6) dans le cas où le circuit avant fluidique de puissance (6) du circuit de freinage avant subit une chute de pression.

3. Dispositif de freinage selon la revendication 1, **caractérisé en ce qu'**il comprend
un circuit de freinage avant incluant :
i-un circuit avant fluidique dé puissance (6), et
ii-un circuit avant fluidique de commande (12),
un circuit de freinage arrière incluant :
i-un circuit arrière fluidique de puissance (14), et
ii-un circuit arrière fluidique de commande (19),
le circuit de freinage arrière étant équipé de moyens de dérivation du fluide sous pression du circuit avant fluidique de commande (12) vers le circuit arrière fluidique de puissance (14) dans le cas où le circuit arrière fluidique de puissance (14) du circuit de freinage arrière subit une chute de pression.

4. Dispositif de freinage selon la revendication 1, **caractérisé en ce qu'**il comprend
un circuit de freinage avant incluant :
i-un circuit avant fluidique de puissance (6), et
ii-un circuit avant fluidique de commande (12),
un circuit de freinage arrière incluant :
i-un circuit arrière fluidique de puissance (14), et
ii-un circuit arrière fluidique de commande (19),
le circuit de freinage avant étant équipé de moyens de dérivation du fluide sous pression du circuit arrière fluidique de commande (19) vers le circuit fluidique avant de puissance (6) dans le cas où le circuit avant fluidique de puissance (6) du circuit de freinage avant subit une chute de pression, et
le circuit de freinage arrière étant équipé de moyens de dérivation du fluide sous pression du circuit avant fluidique de commande (12) vers le circuit arrière fluidique de puissance (14) dans le cas où le circuit arrière fluidique de puissance (14) du circuit de freinage arrière subit une chute de pression.

5. Dispositif de freinage selon l'une des revendications 1 à 4, **caractérisé en ce que** les moyens de dérivations comprennent une double valve d'arrêt (20,26) susceptible de dériver du fluide sous pression du circuit de commande (12,19) d'un circuit de freinage vers le circuit fluidique de puissance (6,14) d'un autre circuit de freinage dans le cas où le circuit fluidique de puissance (6,14) de ce dernier circuit de freinage subit une chute de pression

6. Dispositif de freinage selon l'une des revendications 1 à 5, **caractérisé en ce que** la double valve d'arrêt (20,26) présente :
- une première entrée (21,28) connectée à un premier circuit fluidique de puissance (6,14) d'un circuit de freinage,
- une seconde entrée (22,27) connectée au circuit fluidique de commande (12,19) d'un second circuit de freinage, la sortie (23,30) de la double valve de l'arrêt étant connectée à un module électronique (9,18) de contrôle de freinage de premier circuit de freinage, et
- un obturateur (24,29) susceptible d'occuper une position de fonctionnement normal dans laquelle la pression du circuit de puissance (6,14) du premier circuit de freinage plaque l'obturateur (24,29) contre l'entrée (22,27) connectée au circuit de commande (12,19) du second circuit de freinage et une position de fonctionnement défaillant dans laquelle la pression du circuit fluidique de commande (12,19) du second circuit plaque l'obturateur (24,29) contre l'entrée (21,29) connectée au circuit de puissance (6,14) du premier circuit de freinage et fournit une énergie de freinage au module électronique de contrôle de freinage du premier circuit de freinage.

7. Dispositif de freinage d'un véhicule industriel selon la revendication 6, **caractérisé en ce qu'**il comprend
un circuit de freinage avant incluant :
i-un circuit avant fluidique de puissance (6) destiné à fournir une énergie de freinage à au moins un train roulant avant du véhicule possédant deux roues liées chacune à des moyens de freinage, le circuit fluidique de puissance avant (6) comprenant un réservoir (4) de fluide sous pression connecté à au moins deux actionneurs (7, 8) de frein agissant sur les moyens de freinage de chaque roue et un module électronique de contrôle avant de freinage (9) pilotant la pression à appliquer à chacun des deux actionneurs (7, 8), et
ii-un circuit avant fluidique de commande (12) destiné à fixer une valeur de consigne à appliquer au module électronique de contrôle de freinage avant (9) au cours d'une phase de freinage, comprenant un Dispositif de commande (11) sur lequel une action est appliquée au cours d'une phase de freinage connecté au module électronique de contrôle de freinage avant (9), la pression du circuit avant fluidique de commande (12) étant inférieure à la pression du circuit avant fluidique de puissance (6), et
un circuit de freinage arrière incluant :
i-un circuit arrière fluidique de puissance (14) destiné à fournir une énergie de freinage à au moins un train roulant arrière du véhicule possédant deux roues liées chacune à des moyens de freinage incluant un réservoir de fluide (5) sous pression connecté à au moins deux actionneurs (16, 17) de frein agissant sur les moyens de freinage et un module électronique de contrôle de freinage arrière (18) pilotant la pression à appliquer à chacun des deux actionneurs (16, 17), et
ii-un circuit arrière fluidique de commande (19) destiné à fixer la valeur de consigne à appliquer au module électronique de contrôle de freinage arrière (18) au cours d'une phase de freinage, incluant le dispositif de commande (11), sur lequel une action est appliquée au cours d'une phase de freinage, connecté au module électronique de contrôle de freinage arrière (18), la pression du circuit arrière fluidique de commande (19) étant inférieure à la pression du second circuit arrière fluidique de puissance (14),
au moins l'un des circuits de freinage avant ou arrière comprend une double valve d'arrêt (20,26) présentant :
- une première entrée (21,28) connectée au circuit fluidique de puissance dudit circuit de freinage,
- une seconde entrée (22,27) connectée au circuit fluidique de commande de l'autre circuit de freinage, la sortie de la double valve de l'arrêt étant connectée au module électronique de contrôle de freinage dudit circuit de freinage, et
- un obturateur (24,29) susceptible d'occuper une position de fonctionnement normal dans laquelle la pression du circuit de puissance dudit circuit de freinage plaque l'obturateur contre l'entrée connectée au circuit de commande de l'autre circuit de freinage et une position de fonctionnement défaillant dans laquelle la pression du circuit fluidique de commande de l'autre circuit plaque l'obturateur contre l'entrée connectée au circuit de puissance dudit circuit de freinage et fournit une énergie de freinage au module électronique de contrôle de freinage dudit circuit de freinage pilotant la pression à appliquer à chacun des deux actionneurs.

8. Dispositif selon la revendication 7, **caractérisé en ce que** le circuit de freinage avant comprend une double valve d'arrêt (20) présentant :
- une première entrée (21) connectée au circuit fluidique de puissance (6) du circuit de freinage avant,
- une seconde entrée (22) connectée au circuit fluidique de commande (19) du circuit fluidique arrière, la sortie (23) de la double valve d'arrêt (20) étant connectée au module électronique de contrôle de freinage avant (9), et
- un obturateur (24) susceptible d'occuper une position de fonctionnement normal dans laquelle la pression du circuit de puissance avant (6) plaque l'obturateur (24) contre l'entrée (22) connectée au circuit arrière de commande (19) et une position de fonctionnement défaillant dans laquelle la pression du circuit arrière de commande (19) plaque l'obturateur (24) contre l'entrée (21) connectée au circuit avant de puissance (6) et fournit une énergie de freinage au module électronique de contrôle de freinage avant (9) pilotant la pression à appliquer à chacun des deux actionneurs avant (7, 8).

9. Dispositif selon la revendication 7 ou la revendication 8 **caractérisé en ce que** le circuit de freinage arrière comprend une double valve d'arrêt (26) présentant :
- une première entrée (27) connectée au circuit fluidique de puissance (14) du circuit de freinage arrière,
- une seconde entrée (28) connectée au circuit fluidique de commande (12) du circuit fluidique avant, la sortie (30) de la double valve d'arrêt (26) étant connectée au module électronique de contrôle de freinage arrière (18), et
- un obturateur (29) susceptible d'occuper une position de fonctionnement normal dans laquelle la pression du circuit de puissance arrière (14) plaque l'obturateur (29) contre l'entrée (27) connectée au circuit avant de commande (12) et une position de fonctionnement défaillant dans laquelle la pression du circuit avant de commande (12) plaque l'obturateur (29) contre l'entrée (28) connectée au circuit arrière de puissance (14) et fournit une énergie de freinage au module électronique de contrôle de freinage arrière (18) pilotant la pression à appliquer à chacun des deux actionneurs arrière (16, 17).

10. Dispositif de freinage selon l'une des revendications 1 à 9, **caractérisé en ce que** les réservoirs (4) et (5) renferment de l'air comprimé.

11. Dispositif de freinage selon l'une des revendications 1 à 10, **caractérisé en ce qu'**un compresseur (2) et un distributeur d'air (3) alimentent en air comprimé les réservoirs (4, 5).

## Claims

1. Braking device, particularly for an industrial vehicle, comprising at least two fluidic braking circuits acting respectively on at least two wheelsets (7, 8, 16, 17), each braking circuit having a fluidic power circuit (6, 14) able to provide braking energy to one wheelset and a fluidic control circuit (12, 19) able to set a braking value to be applied to a wheelset, **characterized in that** it comprises means of diverting pressurized fluid from the control circuit (12, 19) of one braking circuit to the fluidic power circuit (6, 14) of another braking circuit if the fluidic power circuit of the latter braking circuit suffers a drop in pressure.

2. Braking device according to Claim 1, **characterized in that** it comprises:
a front braking circuit including:
i-a front fluidic power circuit (6), and
ii-a front fluidic control circuit (12),
a rear braking circuit including:
i-a rear fluidic power circuit (14), and
ii-a rear fluidic control circuit (19),
the front braking circuit being equipped with means of diverting pressurized fluid from the rear fluidic control circuit (19) to the front fluidic power circuit (6) if the front fluidic power circuit (6) of the front braking circuit suffers a drop in pressure.

3. Braking device according to Claim 1, **characterized in that** it comprises:
a front braking circuit including:
i-a front fluidic power circuit (6), and
ii-a front fluidic control circuit (12),
a rear braking circuit including:
i-a rear fluidic power circuit (14), and
ii-a rear fluidic control circuit (19),
the rear braking circuit being equipped with means of diverting pressurized fluid from the front fluidic control circuit (12) to the rear fluidic power circuit (14) if the rear fluidic power circuit (14) of the rear braking circuit suffers a drop in pressure.

4. Braking device according to Claim 1, **characterized in that** it comprises:
a front braking circuit including:
i-a front fluidic power circuit (6), and
ii-a front fluidic control circuit (12),
a rear braking circuit including:
i-a rear fluidic power circuit (14), and
ii-a rear fluidic control circuit (19),
the front braking circuit being equipped with means of diverting pressurized fluid from the rear fluidic control circuit (19) to the front fluidic power circuit (6) if the front fluidic power circuit (6) of the front braking circuit suffers a drop in pressure, and
the rear braking circuit being equipped with means of diverting pressurized fluid from the front fluidic control circuit (12) to the rear fluidic power circuit (14) if the rear fluidic power circuit (14) of the rear braking circuit suffers a drop in pressure.

5. Braking device according to one of Claims 1 to 4, **characterized in that** the diverting means comprise a double shut-off valve (20, 26) capable of diverting pressurized fluid from the control circuit (12, 19) of one braking circuit to the fluidic power circuit (6, 14) of another braking circuit if the fluidic power circuit (6, 14) of the latter braking circuit suffers a drop in pressure.

6. Braking device according to one of Claims 1 to 5, **characterized in that** the double shut-off valve (20, 26) has:
- a first inlet (21, 28) connected to a first fluidic power circuit (6, 14) of one braking circuit,
- a second inlet (22, 27) connected to the fluidic control circuit (12, 19) of a second braking circuit, the outlet (23, 30) of the double shut-off valve being connected to an electronic brake control module of the first braking circuit, and
- a shutter (24, 29) able to occupy a normal-operation position in which the pressure of the power circuit (6, 14) of the first braking circuit presses the shutter (24, 29) firmly against the inlet (22, 27) that is connected to the control circuit (12, 19) of the second braking circuit and a defective-operation position in which the pressure of the fluidic control circuit (12, 19) of the second circuit presses the shutter (24, 29) firmly against the inlet (21, 29) that is connected to the power circuit (6, 14) of the first braking circuit and supplies breaking energy to the electronic brake control module of the first braking circuit.

7. Braking device for an industrial vehicle according to Claim 6, **characterized in that** it comprises a front braking circuit including:
i-a front fluidic power circuit (6) intended to provide braking energy to at least one front wheelset of the vehicle having two wheels each connected to braking means, the front fluidic power circuit (6) comprising a reservoir (4) of pressurized fluid which is connected to at least two brake actuators (7, 8) acting on the braking means of each wheel and a front electronic brake control module (9) controlling the pressure that is to be applied to each of the two actuators (7, 8), and
ii-a front fluidic control circuit (12) intended to set a reference value to be applied to the front electronic brake control module (9) during a braking phase, comprising a control device (11) to which an action is applied during a braking phase connected to the front electronic brake control module (9), the pressure in the front fluidic control circuit (12) being lower than the pressure in the front fluidic power circuit (6), and a rear braking circuit including:
i-a rear fluidic power circuit (14) intended to provide braking energy to at least one rear wheelset of the vehicle having two wheels each connected to braking means comprising a reservoir (5) of pressurized fluid which is connected to at least two brake actuators (16, 17) acting on the braking means and a rear electronic brake control module (18) controlling the pressure that is to be applied to each of the two actuators (16, 17), and
ii-a rear fluidic control circuit (19) intended to set the reference value to be applied to the rear electronic brake control module (18) during a braking phase, comprising the control device (11) to which an action is applied during a braking phase connected to the rear electronic brake control module (18), the pressure in the rear fluidic control circuit (19) being lower than the pressure in the second rear fluidic power circuit (14), and
at least one of the front or rear braking circuits comprises a double shut-off valve (20, 26) having:
- a first inlet (21, 28) connected to the fluidic power circuit of the said braking circuit,
- a second inlet (22, 27) connected to the fluidic control circuit of the other braking circuit, the outlet of the double shut-off valve being connected to the electronic brake control module of the said braking circuit, and
- a shutter (24, 29) able to occupy a normal-operation position in which the pressure of the power circuit of the said braking circuit presses the shutter firmly against the inlet that is connected to the control circuit of the other braking circuit and a defective-operation position in which the pressure of the fluidic control circuit of the other circuit presses the shutter firmly against the inlet that is connected to the power circuit of the said braking circuit and supplies braking energy to the electronic brake control module of the said braking circuit controlling the pressure to be applied to each of the two actuators.

8. Device according to Claim 7, **characterized in that** the front braking circuit comprises a double shut-off valve (20) having:
- a first inlet (21) connected to the fluidic power circuit (6) of the front braking circuit,
- a second inlet (22) connected to the fluidic control circuit (19) of the rear fluidic circuit, the outlet (23) of the double shut-off valve (20) being connected to the electronic front braking control module (9), and
- a shutter (24) capable of occupying a normal-operation position in which the pressure of the front power circuit (6) presses the shutter (24) firmly against the inlet (22) that is connected to the rear control circuit (19) and a defective-operation position in which the pressure of the rear control circuit (19) presses the shutter (24) firmly against the inlet (21) that is connected to the front power circuit (6) and provides braking energy to the front electronic brake control module (9) that controls the pressure that is to be applied to each of the two front actuators (7, 8).

9. Device according to Claim 7 or Claim 8, **characterized in that** the rear braking circuit comprises a double shut-off valve (26) having:
- a first inlet (27) connected to the fluidic power circuit (14) of the rear braking circuit,
- a second inlet (28) connected to the fluidic control circuit (12) of the front fluidic circuit, the outlet (30) of the double shut-off valve (26) being connected to the electronic rear brake control module (18), and
- a shutter (29) capable of occupying a normal-operation position in which the pressure of the rear power circuit (14) presses the shutter (29) firmly against the inlet (27) that is connected to the front control circuit (12) and a defective-operation position in which the pressure of the front control circuit (12) presses the shutter (29) firmly against the inlet (28) that is connected to the rear power circuit (14) and provides braking energy to the rear electronic brake control module (18) that controls the pressure that is to be applied to each of the two rear actuators (16, 17).

10. Braking device according to one of Claims 1 to 9, **characterized in that** the reservoirs (4) and (5) contain compressed air.

11. Braking device according to one of Claims 1 to 10, **characterized in that** a compressor (2) and an air distributor (3) supply the reservoirs (4, 5) with compressed air.

## Patentansprüche

1. Bremsvorrichtung, insbesondere für ein Nutzfahrzeug, mit wenigstens zwei strömungstechnischen Bremskreisen, die auf jeweils wenigstens zwei Radachsen (7, 8, 16, 17) wirken, wobei jeder Bremskreis einen Leistungs-Fluidkreis (6, 14) zum Liefern einer Bremsenergie zu einer Radachse und einen Steuerungs-Fluidkreis (12, 19) zum Festlegen eines auf eine Radachse anzulegenden Bremswertes aufweist, **dadurch gekennzeichnet, dass** sie Einrichtungen zum Ableiten des mit Druck beaufschlagten Fluids vom Steuerkreis (12, 19) eines Bremskreises zum Leistungs-Fluidkreis (6, 14) eines anderen Bremskreises für den Fall, dass der Leistungs-Fluidkreis (6, 14) des letzteren Bremskreises einem Druckabfall unterliegt, umfasst.

2. Bremsvorrichtung nach Anspruch 1, **dadurch gekennzeichnet, dass** sie einen vorderen Bremskreis, der
i-einen vorderen Leistungs-Fluidkreis (6) und
ii-einen vorderen Steuerungs-Fluidkreis (12) einschließt, und
einen hinteren Bremskreis umfasst, der
i-einen hinteren Leistungs-Fluidkreis (14) und
ii-einen hinteren Steuerungs-Fluidkreis (19) einschließt,
wobei der vordere Bremskreis mit Einrichtungen zum Ableiten des mit Druck beaufschlagten Fluids vom hinteren Steuerungs-Fluidkreis (19) zum vorderen Leistungs-Fluidkreis (6) für den Fall, dass der vordere Leistungs-Fluidkreis (6) des vorderen Bremskreises einem Druckabfall unterliegt, ausgestattet ist.

3. Bremsvorrichtung nach Anspruch 1, **dadurch gekennzeichnet, dass** sie einen vorderen Bremskreis, der
i-einen vorderen Leistungs-Fluidkreis (6) und
ii-einen vorderen Steuerungs-Fluidkreis (12) einschließt, und
einen hinteren Bremskreis umfasst, der
i-einen hinteren Leistungs-Fluidkreis (14) und
ii-einen hinteren Steuerungs-Fluidkreis (19) einschließt,
wobei der hintere Bremskreis mit Einrichtungen zum Ableiten des mit Druck beaufschlagten Fluids vom vorderen Steuerungs-Fluidkreis (12) zum hinteren Leistungs-Fluidkreis (14) für den Fall, dass der hintere Leistungs-Fluidkreis (14) des hinteren Bremskreises einem Druckabfall unterliegt, ausgestattet ist.

4. Bremsvorrichtung nach Anspruch 1, **dadurch gekennzeichnet, dass** sie einen vorderen Bremskreis, der
i-einen vorderen Leistungs-Fluidkreis (6) und
ii-einen vorderen Steuerungs-Fluidkreis (12) einschließt, und
einen hinteren Bremskreis umfasst, der
i-einen hinteren Leistungs-Fluidkreis (14) und
ii-einen hinteren Steuerungs-Fluidkreis (19) einschließt,
wobei der vordere Bremskreis mit Einrichtungen zum Ableiten des mit Druck beaufschlagten Fluids vom hinteren Steuerungs-Fluidkreis (19) zum vorderen Leistungs-Fluidkreis (6) für den Fall, dass der vordere Leistungs-Fluidkreis (6) des vorderen Bremskreises einem Druckabfall unterliegt, ausgestattet ist, und
wobei der hintere Bremskreis mit Einrichtungen zum Ableiten des mit Druck beaufschlagten Fluids vom vorderen Steuerungs-Fluidkreis (12) zum hinteren Leistungs-Fluidkreis (14) für den Fall, dass der hintere Leistungs-Fluidkreis (14) des hinteren Bremskreises einem Druckabfall unterliegt, ausgestattet ist.

5. Bremsvorrichtung nach einem der Ansprüche 1 bis 4, **dadurch gekennzeichnet, dass** die Ableitungseinrichtungen ein Doppelrückschlagventil (20, 26) umfassen, das in der Lage ist, mit Druck beaufschlagtes Fluid vom Steuerkreis (12, 19) eines Bremskreises zum Leistungs-Fluidkreis (6, 14) eines anderen Bremskreises für den Fall, dass der Leistungs-Fluidkreis (6, 14) des letzteren Bremskreises einem Druckabfall unterliegt, abzuleiten.

6. Bremsvorrichtung nach einem der Ansprüche 1 bis 5, **dadurch gekennzeichnet, dass** das Doppelrückschlagventil (20, 26)
- einen ersten Eingang (21, 28), der mit einem ersten Leistungs-Fluidkreis (6, 14) eines Bremskreises verbunden ist,
- einen zweiten Eingang (22, 27), der mit dem Steuerungs-Fluidkreis (12, 19) eines zweiten Bremskreises verbunden ist, wobei der Ausgang (23, 30) des Doppelrückschlagventils mit einem elektronischen Modul (9, 18) zur Bremssteuerung des ersten Bremskreises verbunden ist, und
- einen Verschluss (24, 29) aufweist, der in der Lage ist, eine Normalbetriebsposition einzunehmen, in der der Druck des Leistungskreises (6, 14) des ersten Bremskreises den Verschluss (24, 29) gegen den Eingang (22, 27), der mit dem Steuerungskreis (12, 19) des zweiten Bremskreises verbunden ist, drückt, und eine Störungsbetriebsposition einzunehmen, in der der Druck des Steuerungs-Fluidkreises (12, 19) des zweiten Kreises den Verschluss (24, 29) gegen den Eingang (21, 29), der mit dem Leistungskreis (8, 14) des ersten Bremskreises verbunden ist, drückt und eine Bremsenergie an das elektronische Modul zur Bremssteuerung des ersten Bremskreises liefert.

7. Bremsvorrichtung für ein Nutzfahrzeug nach Anspruch 6, **dadurch gekennzeichnet, dass** sie
einen vorderen Bremskreis, der
i-einen vorderen Leistungs-Fluidkreis (6), der dazu bestimmt ist, eine Bremsenergie an wenigstens eine vordere Radachse des Fahrzeugs zu liefern, die zwei Räder aufweist, die jeweils mit Bremseinrichtungen verbunden sind,
wobei der vordere Leistungs-Fluidkreis (6) einen Behälter (4) für mit Druck beaufschlagtes Fluid, der mit wenigstens zwei Bremsbetätigungseinrichtungen (7, 8) verbunden ist, die auf die Bremseinrichtungen für jedes Rad wirken, und ein elektronisches Modul zur vorderen Bremssteuerung (9) umfasst, das den an jede der zwei Betätigungseinrichtungen (7, 8) anzulegenden Druck steuert, und
ii-einen vorderen Steuerungs-Fluidkreis (12) einschließt, der dazu bestimmt ist, einen an das elektronische Modul zur vorderen Bremssteuerung (9) im Laufe einer Bremsphase anzulegenden Sollwert festzulegen, der eine Steuerungsvorrichtung (11) umfasst, die im Verlauf einer Bremsphase betätigt wird und die mit dem elektronischen Modul zur vorderen Bremssteuerung (9) verbunden ist, wobei der Druck des vorderen Steuerungs-Fluidkreises (12) geringer als der Druck des vorderen Leistungs-Fluidkreises (6) ist, und einen hinteren Bremskreis umfasst, der
i-einen hinteren Leistungs-Fluidkreis (14), der dazu bestimmt ist, eine Bremsenergie an wenigstens eine hintere Radachse des Fahrzeugs zu liefern, die zwei Räder aufweist, die jeweils mit Bremseinrichtungen verbunden sind, und einen Behälter (5) für mit Druck beaufschlagtes Fluid, der mit wenigstens zwei Bremsbetätigungseinrichtungen (16, 17) verbunden ist, die auf die Bremseinrichtungen wirken, und ein elektronisches Modul zur hinteren Bremssteuerung (18) umfasst, das den an jede der zwei Betätigungseinrichtungen (16, 17) anzulegenden Druck steuert, und
ii-einen hinteren Steuerungs-Fluidkreis (19) einschließt, der dazu bestimmt ist, einen an das elektronische Modul zur hinteren Bremssteuerung (18) im Laufe einer Bremsphase anzulegenden Sollwert festzulegen, der die Steuerungsvorrichtung (11) umfasst, die im Verlauf einer Bremsphase betätigt wird und die mit dem elektronischen Modul zur hinteren Bremssteuerung (18) verbunden ist, wobei der Druck des hinteren Steuerungs-Fluidkreises (19) geringer als der Druck des zweiten hinteren Leistungs-Fluidkreises (14) ist,
wobei wenigstens einer des vorderen oder hinteren Bremskreises ein Doppelrückschlagventil (20, 26) umfasst, das
- einen ersten Eingang (21, 28), der mit dem Leistungs-Fluidkreis des Bremskreises verbunden ist,
- einen zweiten Eingang (22, 27), der mit dem Steuerungs-Fluidkreis des anderen Bremskreises verbunden ist, wobei der Ausgang des Doppelrückschlagventils mit einem elektronischen Modul zur Bremssteuerung des Bremskreises verbunden ist, und
- einen Verschluss (24, 29) aufweist, der in der Lage ist, eine Normalbetriebsposition einzunehmen, in der der Druck des Leistungskreises dieses Bremskreises den Verschluss gegen den Eingang, der mit dem Steuerungskreis des anderen Bremskreises verbunden ist, drückt, und eine Störungsbetriebsposition einzunehmen, in der der Druck des Steuerungs-Fluidkreises des anderen Kreises den Verschluss gegen den Eingang, der mit dem Leistungskreis dieses Bremskreises verbunden ist, drückt und eine Bremsenergie an das elektronische Modul zur Bremssteuerung des Bremskreises liefert, das den an jede der beiden Betätigungseinrichtungen anzulegenden Druck steuert.

8. Vorrichtung nach Anspruch 7, **dadurch gekennzeichnet, dass** der vordere Bremskreis ein Doppelrückschlagventil (20) aufweist, das
- einen ersten Eingang (21), der mit dem Leistungs-Fluidkreis (6) des vorderen Bremskreises verbunden ist,
- einen zweiten Eingang (22), der mit dem Steuerungs-Fluidkreis (19) des hinteren Fluidkreises verbunden ist, wobei der Ausgang (23) des Doppelrückschlagventils (20) mit dem elektronischen Modul zur vorderen Bremssteuerung (9) verbunden ist, und
- einen Verschluss (24) aufweist, der in der Lage ist, eine Normalbetriebsposition einzunehmen, in der der Druck des vorderen Leistungskreises (6) den Verschluss (24) gegen den Eingang (22), der mit dem hinteren Steuerungskreis (19) verbunden ist, drückt, und eine Störungsbetriebsposition einzunehmen, in der der Druck des hinteren Steuerungskreises (19) den Verschluss (24) gegen den Eingang (21), der mit dem vorderen Leistungskreis (6) verbunden ist, drückt und eine Bremsenergie an das elektronische Modul zur vorderen Bremssteuerung (9) liefert, das den an jede der beiden vorderen Betätigungseinrichtungen (7, 8) anzulegenden Druck steuert.

9. Vorrichtung nach Anspruch 7 oder Anspruch 8, **dadurch gekennzeichnet, dass** der hintere Bremskreis ein Doppelrückschlagventil (26) aufweist, das
- einen ersten Eingang (27), der mit dem Leistungs-Fluidkreis (14) des hinteren Bremskreises verbunden ist,
- einen zweiten Eingang (28), der mit dem Steuerungs-Fluidkreis (12) des vorderen Fluidkreises verbunden ist, wobei der Ausgang (30) des Doppelrückschlagventils (26) mit dem elektronischen Modul zur hinteren Bremssteuerung (18) verbunden ist, und
- einen Verschluss (29) aufweist, der in der Lage ist, eine Normalbetriebsposition einzunehmen, in der der Druck des hinteren Leistungskreises (14) den Verschluss (29) gegen den Eingang (27), der mit dem vorderen Steuerungskreis (12) verbunden ist, drückt, und eine Störungsbetriebsposition einzunehmen, in der der Druck des vorderen Steuerungskreises (12) den Verschluss (29) gegen den Eingang (28), der mit dem hinteren Leistungskreis (14) verbunden ist, drückt und eine Bremsenergie an das elektronische Modul zur hinteren Bremssteuerung (18) liefert, das den an jede der beiden hinteren Betätigungseinrichtungen (16, 17) anzulegenden Druck steuert.

10. Bremsvorrichtung nach einem der Ansprüche 1 bis 9, **dadurch gekennzeichnet, dass** die Behälter (4) und (5) Druckluft einschließen.

11. Bremsvorrichtung nach einem der Ansprüche 1 bis 10, **dadurch gekennzeichnet, dass** die Behälter (4, 5) durch einen Kompressor (2) und einen Luftverteiler (3) mit Druckluft versorgt werden.
